(19) Europäisches Patentamt
European Patent Office
Office européen des brevets

(11) Veröffentlichungsnummer: **0 387 594**
**A2**

(12) **EUROPÄISCHE PATENTANMELDUNG**

(21) Anmeldenummer: **90103774.7**

(22) Anmeldetag: **27.02.90**

(51) Int. Cl.[5]: **C08L 83/10, C08F 283/00, //(C08L83/10,51:08)**

(30) Priorität: **11.03.89 DE 3907912**

(43) Veröffentlichungstag der Anmeldung:
**19.09.90 Patentblatt 90/38**

(84) Benannte Vertragsstaaten:
**DE ES FR GB IT NL**

(71) Anmelder: **BAYER AG**
**D-5090 Leverkusen 1 Bayerwerk(DE)**

(72) Erfinder: **Jung, Alfred, Dr.**
**Bodelschwinghstrasse 12**
**D-4150 Krefeld 1(DE)**
Erfinder: **Dujardin, Ralf, Dr.**
**Bodelschwinghstrasse 18**
**D-4150 Krefeld 1(DE)**
Erfinder: **Grigo, Ulrich, Dr.**
**Michelsheide 9**
**D-4152 Kempen 3(DE)**
Erfinder: **Nouvertné, Werner, Dr.**
**Burgstrasse 17b**
**D-4150 Krefeld(DE)**

(54) **Mischungen aus Polydiorganosiloxan-Polycarbonat-Block-cokondensaten und Pfropfpolymerisaten.**

(57) Gegenstand der vorliegenden Erfindung sind Mischungen bestehend aus Polydiorganosiloxan-Polycarbonat-Blockcokondensaten und gepfropften Vinylcopolymerisaten sowie gegebenenfalls mindestens einem Zusatz ausgewählt aus Verarbeitungshilfsmitteln, Füllstoffen, Verstärkungsmitteln, Pigmenten und Flammschutzmitteln, und Verfahren zu ihrer Herstellung.

EP 0 387 594 A2

# Mischungen aus Polydiorganosiloxan-Polycarbonat-Blockcokondensaten und Pfropfpolymerisaten

Gegenstand der deutschen Offenlegungsschrift 37 17 172 (Le A 25 000) ist ein Verfahren zur Herstellung von Vinylcopolymerisaten mit aufgepropften Polycarbonatketten, deren Vinylcopolymerisatpfropfgrundlage ein $\overline{M}n$ (Zahlenmittelmolekulargewicht, ermittelt durch Gelpermeationschromatograhie) von 45 000 bis 95 000 hat, deren Polycarbonatketten einen Polykondensationsgrad an wiederkehrenden Carbonatstruktureinheiten von 35 bis 70 haben, und die ein Gewichtsverhältnis von Vinylcopolymerisatpfropfgrundlage zu aufgepfropften Polycarbonatketten zwischen 35 Gew.-% zu 65 Gew.-% und 55 Gew.-% zu 45 Gew.-% haben, das dadurch gekennzeichnet ist, daß man 95 Mol-% bis 99,5 Mol-% an Styrol und 5 Mol-% bis 0,5 Mol-% an Verbindungen der Formel (I)

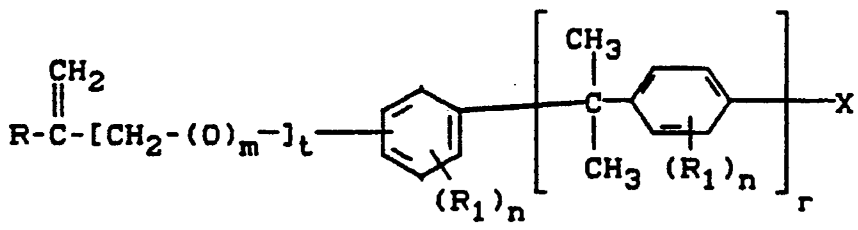

(I)

worin
R = H oder $C_1$-$C_4$-Alkyl,
$R_1$ Cl, Br, $C_1$.$C_4$-Alkyl, Cyclohexyl oder $C_1$-$C_4$-Alkoxy,
m = 0 oder 1,
n = 0, 1 oder 2,
r = 0 oder 1,
t = 0 oder 1 und
X = -O-Si($CH_3$)$_3$ sind,
durch radikalische initierte Massepolymerisation bis zu einem gewünschten Molekulargewicht ( $\overline{M}n$, Zahlenmittelmolekulargewicht) zwischen 45 000 und 95 000 nach bekannten Verfahren copolymerisiert, und danach das Polymerisat ohne Isolierung mit Diphenolen, Phosgen und Monophenolen in wäßrig-alkalischer Phase unter Zusatz eines inerten organischen Lösungsmittels unter den Bedingungen des Zweiphasengrenzflächenverfahrens umsetzt, wobei die Menge an Diphenol so gewählt ist, daß der Gehalt an Polycarbonatketten im gepfropften Vinylcopolymerisat zwischen 65 Gew.-% und 45 Gew.-%, bezogen auf das Gesamtgewicht des gepfropften Vinylcopolymerisats inclusive aufgepfropften Polycarbonatketten, beträgt, und wobei die Menge an Kettenabbrecher so bemessen ist, daß die mittlere Kettenlänge der aufgepfropften Poly carbonatseitenketten jeweils zwischen 35 und 70 wiederkehrende Carbonatstruktureinheiten aufweist, und wobei die Menge an inerten organischen Lösungsmittel so bemessen sein muß, daß die Endviskosität der organischen Phase der Reaktionsmischung zwischen 5 und 25 mPa.s, vorzugsweise zwischen 10 und 20 mPa.s liegt.

Als Endviskosität ist die mit einem Höppler-Viskosimeter bestimmte absolute Viskosität der organischen Phase des Reaktionsgemisches nach abgeschlossener Polykondensation bei 20° C zu verstehen.

Gegenstand der deutschen Offenlegungsschrift 37 17 172 sind außerdem gepfropfte Vinylcopolymerisate, erhältlich nach dem vorstehend beschriebenen Verfahren, und außerdem gepfropfte Vinylcopolymerisate, die dadurch gekennzeichnet sind, daß sie Struktureinheiten der Formel (IIIa) enthalten

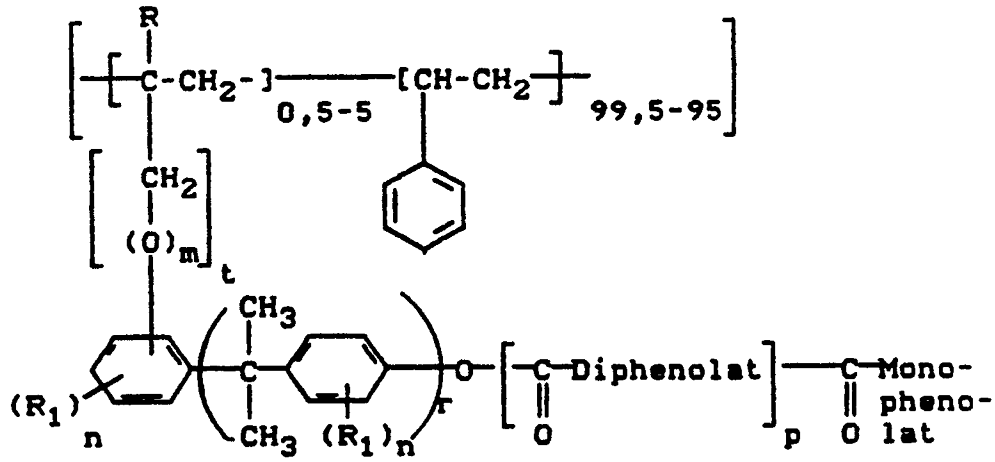

worin
R, $R_1$, m, n, r und t die für Formel (I) genannte Bedeutung hanben, p eine ganze Zahl zwischen 35 und 70 ist und Diphenolat und Monophenolat Reste sind, die durch Abzug der phenolischen H-Atome aus Diphenolen bzw. Monophenolen resultieren.

Gegenstand der deutschen Offenlegungsschrift 37 17 172 ist außerdem die Verwendung der gepfropften Vinylcopolymerisate als Modifikatoren für Mischungen aus thermoplastischen Polycarbonaten und thermoplastischen Polystyrolen.

Gegenstand der deutschen Offenlegungsschrift Nr. 37 17 172 sind außerdem Mischungen von

A) 70 bis 20 Gew.-%, vorzugsweise 65 bis 40 Gew.-% eines thermoplastischen, aromatischen Polycarbonats auf Basis von Diphenolen der Formel (II)

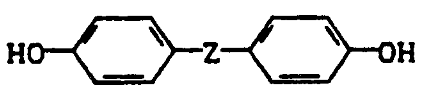

(II)

worin
Z eine Einfachbindung, ein Alkylen-Rest mit 1 bis 8 C-Atomen, ein Alkyliden-Rest mit 2 bis 12 C-Atomen, ein Cyclohexyliden-Rest, ein Benzyliden-Rest, ein Methyl-benzyliden-Rest, ein Bis-(phenyl)-methylen-Rest, -S-, $-SO_2-$, -CO- oder -O- ist, mit $\overline{M}_w$ (Gewichtsmittelmolekulargewichten, ermittelt in bekannter Weise über die relative Lösungsviskosität) zwischen 15 000 und 120 000, vorzugsweise zwischen 20 000 und 80 000 und insbesondere zwischen 25 000 und 45 000, und

B) 30 bis 80 Gew.-%, vorzugsweise 35 bis 60 Gew.-% eines thermoplastische Polystyrols mit einem $\overline{M}_w$ (Gewichtsmittelmolekuargewicht, ermittelt durch Gelpermeationschromatographie in bekannter Weise) von 20 000 bis 400 000, vorzugsweise von 30 000 bis 330 000 und insbesondere 60 000 bis 260 000, die dadurch gekennzeichnet sind, daß sie 0,5 Gew.-% bis 15 Gew.-%, vorzugsweise 1,0 Gew.-% bis 12 Gew.-% und insbesondere 2 Gew.-% bis 9 Gew.-%, bezogen auf jeweils 100 Gew.-% an A) + B), an gemäß DE-OS 37 17 172 erhältlichem, gefropftem Vinylcopolymerisat enthalten.

Die gepfropften Vinylcopolymerisate sind ausgezeichnete Verträglichkeitsmacher für Polycarbonat-Polystyrol-Gemische, so daß derartige Gemische für optische Zwecke, insbesondere für optische Datenspeicher, Verwendung finden können.

Die für die Pfropfreaktion gemäß DE-OS 37 17 172 geeigneten Diphenole sind die für die bekannte Herstellung von thermoplastischen Polycarbonaten üblichen Diphenole, vorzugsweise solche der Formel (IV) HO-D-OH, worin D ein zweibindiger, organischer Rest mit 6 bis 30 C-Atomen ist, und insbesondere solche der Formel (II).

Beispiele für geeignete Diphenole sind beispielsweise 2,2-Bis(4-hydroxyphenyl)-propan, 2,2-Bis(3,5-dimethyl-4-hydroxyphenyl)-propan, 2,2-Bis(3,5-dichlor-4-hydroxyphenyl)-propan und 1,1-Bis(4-hydroxyphenyl)-cyclohexan, außerdem Polydialkylsiloxandiphenole, wie sie nachfolgend unter Formel (IIa) aufgeführt sind.

Die Pfropfseitenketten können sowohl ein als auch mehrere Diphenole einkondensiert enthalten, hierbei sei erwähnt, daß die Diphenole der Formel (IIa) in den Seitenketten in einer Menge von maximal 20 Gew.-%, bezogen auf das Gesamtgewicht der Polycarbonatseitenketten, enthalten sind.

Geeignete Monophenole der Kettenabbrecher sind beispielsweise Phenol, p-tert.-Butylphenol, p-Cumylphenol und p-Isooctylphenol.

Die als Komponente A) einzusetzenden Polycarbonate sind als solche bekannt oder nach bekannten Verfahren herstellbar. (Siehe bzw "H. Schnell, Chemistry and Physics of Polycarbonates, Interscience Publishers, New York, 1964).

Polycarbonate auf Basis der Diphenole der Formel (II) sind solche, die zumindest 80 Gew.-%, bezogen auf die Molsumme der einzusetzenden Diphenole, an Diphenolen der Formel (II) einkondensiert enthalten.

Bevorzugte andere Diphenole, die in Mengen von maximal 20 Gew.-%, bezogen auf die Molsumme der einzusetzenden Diphenole, eingesetzt werden, sind solche der Formel (IIa)

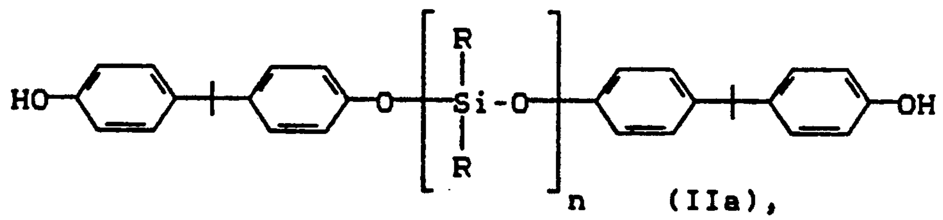

(IIa),

worin

R = $C_1$-$C_6$-Alkyl, vorzugsweise $CH_3$-, und

n = 20 bis 200, vorzugsweise 40 bis 80 sind.

Bevorzugte Diphenole der Formel (II) sind 2,2-Bis-(4-hydroxyphenyl)-propan und 1,1-Bis(4-hydroxyphenyl)-cyclohexan.

Geeignete Diphenole der Formel (IIa) sind beispielsweise solche der Formel (IIb)

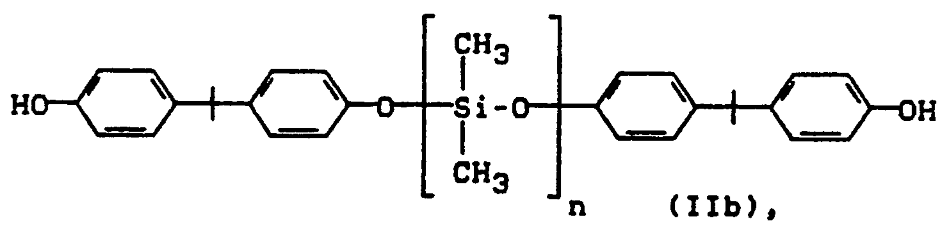

(IIb),

worin

n = 40, 60 oder 80 ist.

Geeignete Kettenabbrecher zur Herstellung der Polycarbonate der Komponente A) sind beispielsweise Phenol, p-tert.-Butylphenol und p-Isooctylphenol.

Die Polycarbonate gemäß Komponente A) sind sowohl Homopolycarbonate als auch Copolycarbonate.

Es wurde nun gefunden, daß Gemische aus

1) den gepfropften Vinylcopolymerisaten enthaltend Struktureinheiten der Formel (IIIa), in denen als Diphenolat-Reste in den Seitenketten bis zu 20 Gew.-%, vorzugsweise von 15 Gew.-% bis 5 Gew.-% Polydialkylsiloxandiphenole der Formel (IIa), beispielsweise die der Formel (IIb), bezogen auf das Gesamtgewicht der Polycarbonatseitenketten, einkondensiert enthalten sind, und

2) Polydiorganosiloxan-Polycarbonat-Blockcokondensate auf Basis von Diphenolen, worin von 2 Gew.-% bis 20 Gew.-%, bezogen auf die Molsumme der einkondensierten Diphenole, Polydiorganosiloxandiphenole (IIc), beispielsweise solche der Formel (IIb), einkondensiert sind, eine deutlich verbesserte Kraftstoffbeständigkeit besitzen, bei gleichzeitig guten Verarbeitungsstabilitäten und Oberflächeneigenschaften daraus hergestellter Formkörper.

Gegenstand der vorliegenden Erfindung sind somit Mischungen bestehend aus

1) 0,1 Gew.-% bis 30 Gew.-% an gepfropften Vinylcopolymerisaten enthalend Struktureinheiten der Formel (IIIa)

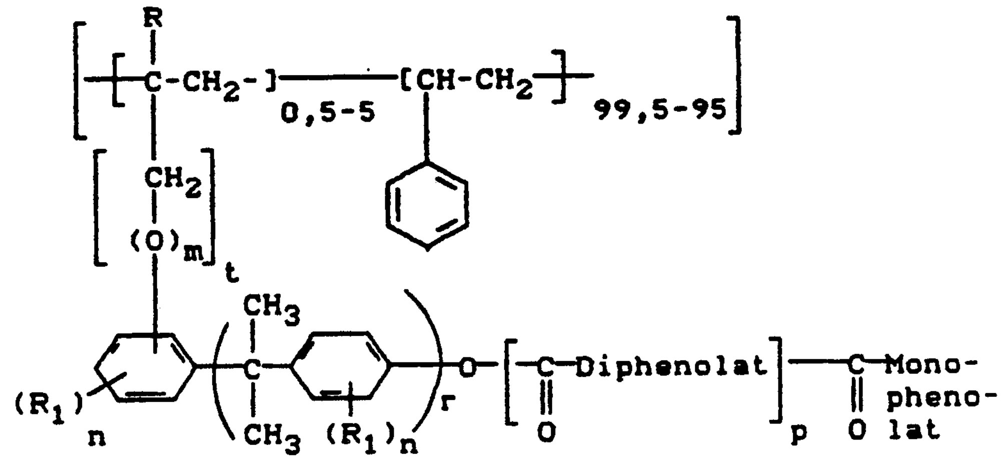

gemäß der deutschen Offenlegungsschrift 37 17 172 (Le A 25 000), worin
R = H oder $C_1$-$C_4$-Alkyl,
$R_1$, = Cl, Br, $C_1$-$C_4$-Alkyl, Cyclohexyl oder $C_1$-$C_4$-Alkoxy,
m = 0 oder 1,
n = 0, 1 oder 2,
r = 0 oder 1,
t = 0 oder 1,
p = eine ganze Zahl zwischen 35 und 70 ist,
und Diphenolat und Monophenolat Reste sind, die durch Abzug der phenolischen H-Atome aus Diphenolen bzw. Monophenolen resultieren, wobei die Pfropfgrundlage von (IIIa) ein $\overline{M}n$ (Zahlenmittelmolekulargewicht, ermittelt durch Gelpermeationschromatographie) von 45 000 bis 95 000, vorzugsweise von 60 000 bis 80 000 hat, wobei der Gehalt an Pfropfgrundlage in (IIIa) zwischen 35 Gew.-% und 55 Gew.-%, vorzugsweise zwischen 40 Gew.-% und 50 Gew.-%, bezogen auf Gesamtgewicht an gepfropftem Vinylcopolymerisat inclusive aufgepfropften Polycarbonatketten beträgt, wobei somit der Gehalt an Polycarbonatseitenketten in (IIIa) zwischen 65 Gew.-% und 45 Gew.-%, vorzugsweise zwischen 60 Gew.-% und 50 Gew.-%, bezogen auf Gesamtgewicht an gepfropftem Vinylcopolymerisat inclusive aufgepfropften Polycarbonatketten beträgt, und wobei die Diphenolat-Reste in (IIIa) bis zu 20 Gew.-%, vorzugsweise von 15 Gew.-% bis 5 Gew.-%, bezogen auf das Gesamtgewicht der Polycarbonatseitenketten, Reste der Formel (IIa.1)

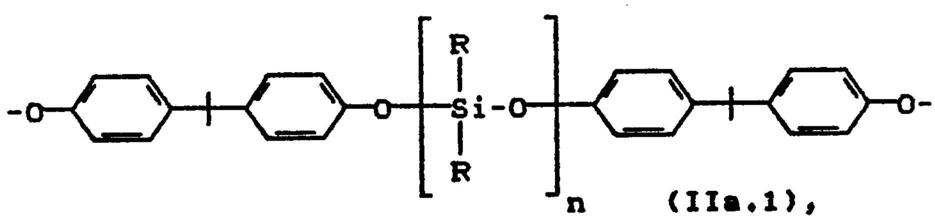

(IIa.1),

sind,
worin "R" und "n" die für die Formel (IIa) bereits genannte Bedeutung haben,
und

2) 99,9 Gew.-% bis 70 Gew.-% an thermoplastischen, aromatischen Polydiorganosiloxan-Polycarbonat-Blockcokondensaten auf Basis der Diphenole der Formeln (IIc) und (IV)

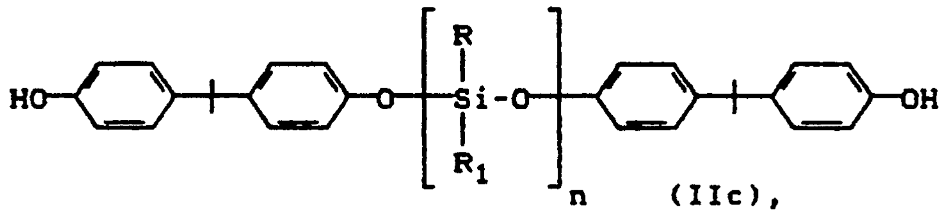

(IIc),

HO-D-OH (IV),

worin

R und $R_1$ unabhängig voneinander $C_1$-$C_{20}$-Alkyl und $C_6$-$C_{14}$-Aryl bedeuten, welche durch Fluor, Chlor und/oder Brom substituiert sein können, worin "n" eine ganze Zahl von 5 bis 100, vorzugsweise von 20 bis 80 ist und worin -D- ein zweibindiger $C_6$-$C_{30}$-Rest eines Si-freien Diphenols ist, wobei von 2 Gew.-% bis 20 Gew.-% Diphenole der Formel (IIc) und von 98 Gew.-% bis 80 Gew.-% Diphenole der Formel (IV), bezogen jeweils auf die Molsumme der im Blockcokondensat der Komponente 2) einkondensierten Diphenole (IIc) + (IV), enthalten sind, mit einem $\overline{M}w$ (Gewichtsmittelmolekulargewicht, ermittelt in bekannter Weise über die relative Lösungsviskosität) zwischen 15.000 und 38.000 und mit einer relativen Viskosität (gemessen an einer Lösung von 0,5 g Blockkondensat in 1 dl $CH_2Cl_2$ bei 25 °C) von 1,15 bis 1,38, vorzugsweise von 1,20 bis 1,35.

Bevorzugte Reste R und $R_1$ in (IIc) sind $C_1$-$C_6$-Alkyl, die wiederum durch Fluor, Chlor und/oder Brom substituiert sein können.

Beispiele für R- und $R_1$-Reste in (IIc) sind Ethyl, Propyl, n-Butyl, tert.-Butyl, Chlormethyl, Trifluormethyl, Phenyl, Chlorphenyl und Naphthyl; bevorzugter Rest für R und $R_1$ ist Methyl.

Aus dem US-Patent 3 856 886 sind entsprechende Vinylcopolymerisate mit mittleren Molekulargewichten $\overline{M}n$ (Zahlenmittel) von 10 000 bis 200 000, vorzugsweise von 20 000 bis 50 000 (Spalte 2, Zeilen 10 bis 16 des US-Patents 3 856 886) bekannt. Auf diese Vinylcopolymerisate werden ebenfalls Polycarbonat aufgepfropft, wobei auf die US-Patentschrift 3 687 895 verwiesen wird.

Die gemäß vorliegender Erfindung zu verwendenden gepfropften Vinylcopolymerisate sind zwar unter der allge meinen Formel des US-Patents 3 856 886 subsummiert, aber nie sind die geforderten 3 Kriterien, nämlich $\overline{M}n$ der Pfropfgrundlage von 45 000 bis 95 000, wiederkehrende Carbonatstruktureinheiten von 35 bis 70 in den Seitenketten und Gewichtsverhältnisse von Polycarbonatketten zu Pfropfgrundlage zwischen 65 Gew.-% zu 35 Gew.-% und 45 Gew.-% zu 55 Gew.-% in der Patentschrift zusammen konkret offenbart. Immer ist mindestens eines dieser Kriterien nicht erfüllt.

In dem US-Patent 3 856 886 werden die gepfropften Vinylcopolymerisate mit Vinylpolymerisaten und/oder thermoplastischen Polycarbonaten abgemischt.

Aus den Beispielen dieses US-Patents ergibt sich nun, daß für die Abmischungen mit Vinylpolymerisaten, also beispielsweise mit Polystyrol, nur Pfropfpolymerisate mit wenig Pfropfgrundlage ausgewählt werden. (In den Beispielen 1 bis 7a nur jeweils 5 Gew.-% Pfropfgrundlage).

Aus den Beispielen 8 bis 15 ergibt sich, daß für die Abmischungen mit thermoplastischen Polycarbonaten die Pfropfgrundlage des gepfropften Vinylpolymerisate höher liegt, nämlich zwischen 10 und 30 Gew.-%.

Aus den Beispielen 16 bis 24 ergibt sich wiederum, daß die eingesetzten Pfropfcopolymerisate eine Pfropfgrundlage von nur 5 Gew.-% haben.

Die Abmischungen der gepfropften Vinylcopolymerisate mit anderen Vinylpolymerisaten haben keine unverträglichkeitserscheinungen, haben eine verbesserte Verseifungs stabilität, ein verbessertes Fließverhalten und eine verbesserte Thermostabilität. (Siehe Spalte 4, Zeilen 16 bis 53 von US-PS 3 856 886 und Seiten 3/4 von DE-OS 2 019 992).

Die Abmischungen der gepfropften Vinylcopolymerisate mit thermoplastischen Polycarbonaten haben eine verbesserte Alkali- und Heißwasserbeständigkeit, außerdem verbesserte mechanischen Eigenschaften und zeigen ebenfalls, keine Unverträglichkeitserscheinungen. (Spalte 6, Zeilen 47 bis 61 von US-PS 3 856 886 sowie Seiten 3/4 der DE-OS 2 019 994).

Die Abmischungen der gepfropften Vinylcopolymerisate mit thermoplastischen Polycarbonaten und mit anderen Vinylpolymerisaten haben eine verbesserte Alkali- und Heißwasserbeständigkeit, keine Unverträglichkeitserscheinungen, verbesserte mechanische und thermische Eigenschaften und verbesserte Fließeigenschaften. (Siehe Spalte 10, Zeilen 4 bis 36 von US-PS 3 856 886 sowie Seiten 3/4 der DE-OS 2 019

993).

Somit kann man feststellen, daß weder im US-Patent 3 856 886, noch in den entsprechenden deutschen Offenlegungsschriften Nr. 20 19 992, Nr. 20 19 993 und Nr. 20 19 994 die gepfropften Vinylcopolymerisate beschrieben sind; außerdem sind die in diesen Literaturstellen angezogenen thermoplastichen Polycarbonate keine Polydiorganosiloxan-Polycarbonat-Blockcokondensate.

Polydiorganosiloxan-Polycarbonat-Blockcokondensate sind allerdings aus anderen Literaturstellen bekannt (siehe beispielsweise DE-OS 33 47 071 (Le A 22 802) und die dort angezogene Literatur).

Der Gegenstand der vorliegenden Erfindung lag jedoch nicht nahe, da in den DE-OS 37 17 172 (Le A 25 000) die dort beschriebenen Mischungen nicht auf ein Verbesserung der Benzinbeständigkeit abzielen.

Entsprechendes gilt für die Lehre der EP-OS 0 293 908.

Geeignete Diphenole der Formel (IV) sind solche, in denen -D- p-Phenylen, m-Phenylen ist, oder die der Formel (IId) entsprechen

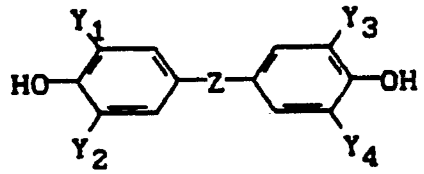

(IId)

worin Z die für Formel (II) genannte Bedeutung hat und $Y_1$ bis $Y_4$ unabhängig voneinander H, $C_1$-$C_4$-Alkyl, vorzugsweise $CH_3$, oder Halogen, vorzugsweise Cl oder Br sind.

Beispiele für Diphenole der Formel (IV) sind:
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dimethyl-4-hydroxyphenyl)-propan,
Bis-(3,5-dimethyl-4-hydroxyphenyl)-ethan,
Bis-(3,5-dimethyl-4-hydroxyphenyl)-methan und
Bis-(4-hydroxyphenyl)-sulfid.

Die Diphenole der Formel (IV) bzw. die entsprechenden Diphenolat-Reste (IV.1) -O-D-O- (IV.1) sind vorzugsweise auch zum Aufbau der Polycarbonatseitenketten in den gepfropften Vinylcopolymerisaten gemäß Komponente 1) der vorliegenden Erfindung geeignet, und zwar neben den erfindungsgemäß erforderlichen Diphenolat-Resten (IIa.1) in den jeweils bis zu 100 Gew.-% der Polycarbonatseitenketten komplementären Mengen.

Geeignete Monophenole für die Monophenolatreste in den gepfropften Vinylcopolymerisatstruktureinheiten der Formel (IIIa) gemäß Komponente 1) der vorliegenden Erfindung sind beispielsweise Phenol, p-tert.-Butylphenol, p-Cumylphenol und p-Isooctylphenol.

Diese Kettenabbrecher sind auch für die Herstellung der erfindungsgemäß einzusetzenden Polydiorganosiloxan-Polycarbonat-Blockcokondensate gemäß Komponente 2) der erfindungsgemäßen Mischungen geeignet.

Die Herstellung der erfindungsgemäß als Komponente 1) einzusetzenden gepfropften Vinylcopolymerisate ist in der deutschen Offenlegungsschrift 37 17 172 (Le A 25 000) wie folgt im einzelnen beschrieben:

Die zur Herstellung der gepfropften Vinylcopolymerisate erforderlichen Verbindungen der Formel (I) sind entweder bekannt oder nach bekannten Verfahren herstellbar. (Siehe beispielsweise H. Niederprüm, P. Voss, V. Beyl Liebigs Ann., 1973, 20-32 und Japan Kokai Tokyo Koko 79/122 257).

Beispiele für solche Verbindungen sind beispielsweise 3-Trimethylsiloxystyrol, 4-Trimethylsiloxystyrol, 3-Trimethylsilyloxy-α-methylstyrol, 4-Trimethylsiloxy-α-methylstyrol, 2-Methyl-4-trimethylsiloxystyrol, 2-Methyl-4-trimethylsilox-α-methylstyrol, 2,6-Dichor-4-trimethylsiloxy-α-methylstyrol, 3-Trimethylsiloxy-allylbenzol, 4-Trimethylsiloxy-allylbenzol und 4-Trimethylsiloxyphenyl-allylether.

Eine Möglichkeit zur Herstellung der Verbindungen der Formel (I) besteht darin, daß man die entsprechenden Phenole (Ia), welche den Verbindungen der Formel (I) entsprechen, worin jedoch X = OH ist, mit Hexamethyldisilazan bei 150° C umsetzt (H. Niederprüm, P. Voss, V. Beyl, Liebigs Ann., 1973, 20-32).

Die radikalisch initierte Massepolymerisation kann beispielsweise wie nachstehend beschrieben, erfolgen:

95-99,5 mol.-% Vinylaromat und 0,5-5 mol-% einer Verbindung der Formel (I) werden unter Stickstoffatmosphäre mit 0,05-0,25 Gew.-% α,α′-Azodiisobutyronitril, bezogen auf die eingesetzte Gewichtsmenge an

Vinylaromaten, versetzt und 20-40 Stunden bei 60-100° C polymerisiert. Die Reaktionsbedingungen bzgl. Temperatur und Initiatorkonzentration entsprechen denen bekannter Verfahren (siehe auch Houben-Weyl Band 14/1, "Makromolekulare Stoffe" Seite 753 f.f., Georg Thieme Verlag, Stuttgart 1962).

Die Polymerisationszeit richtet sich nach dem Anteil an Comonomeren der Formel (I) und dem angestrebten Molekulargewicht der Vinylcopolymerisatpfropfgrundlage. Bei angestrebtem, hohem Molekulargewicht der Pfropfgrundlage und gleichzeitigem, hohem Anteil an Verbindungen der Formel (I) ist die Polymerisationszeit entsprechend länger zu wählen als bei einem angestrebten niedrigeren Molekulargewicht der Pfropfgrundlage und/oder bei niedrigem Anteil an Verbindungen der Formel (I).

Die resultierenden, noch ungepfropften Copolymerisate bestehen somit aus bifunktionellen Struktureinheiten der Formel (III)

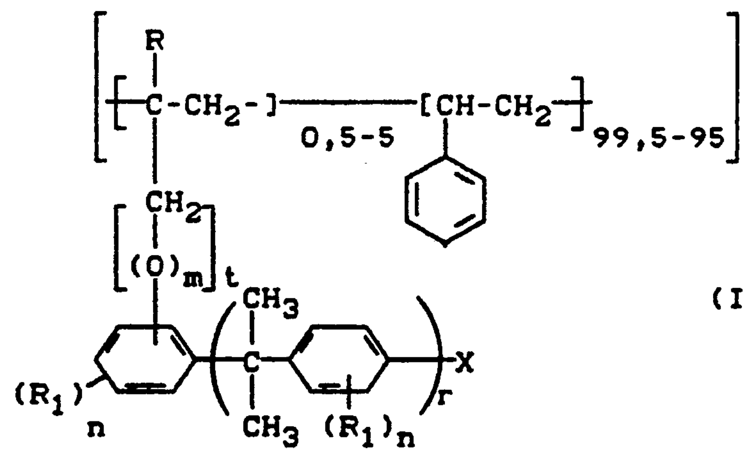

(III)

worin

R, $R_1$, m, n, r, t und X die für Formel (I) genannte Bedeutung haben.

Inerte organische Lösungsmittel für die Pfropfungsreaktion sind beispielsweise Methylenchlorid und Chlorbenzol.

Die Gewichtsmenge an inertem Lösungsmittel beträgt etwa das 20-25 fache, bezogen auf die in der Pfropfungsreaktion eingesetzte Gewichtsmenge an Pfropfgrundlage. Die Menge an Lösungsmittel richtet sich nach der jeweils eingesetzten Gewichtsmenge an Pfropfgrundlage im herzustellenden Pfropf; bei geringer Menge an Pfropfgrundlage reicht eine geringere Menge, bei einer höheren Menge an Pfropfgrundlage im Pfropf wird eine größere Menge an Lösungsmittel benötigt. Die Menge an Lösungsmittel ist natürlich so zu wählen, daß die erhaltene Endviskosität in den anfangs erwähnten Bereich fällt.

Als wäßrige alkalische Phase dient beispielsweise wäßrige Natronlauge oder Kalilauge.

Geeignete Katalysatoren sind beispielsweise tertiäre Amine, wie z.B. Triethylamin oder N-Ethylpiperidin.

Die resultierenden, gepfropften Copolymerisate enthalten somit Struktureinheiten der Formel (IIIa), welche den Struktureinheiten der Formel (III) entsprechen, worin jedoch

$X = -O-[-\underset{\underset{O}{\|}}{C}-\text{Diphenolat}-]_p-\underset{\underset{O}{\|}}{C}-\text{Monophenolat}$ ist,

worin p eine ganze Zahl zwischen 35 und 70 ist und Diphenolat bzw. Monophenolat Reste wie -O-D-O- bzw.

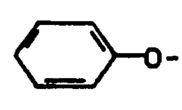

darstellen, welche naturgemäß aus der Umsetzung mit Phosgen in wäßrig alkalischer Phase resultieren, d.h. Reste sind, die durch Abzug der phenolischen H-Atome aus Diphenolen bzw. Monophenolen resultieren.

Die erfindungsgemäße Pfropfreaktion läßt offen, ob alle Pfropfstellen X der Pfropfgrundlage jeweils an der Pfropfreaktion partizipieren, gegebenenfalls kann reines Polycarbonat in untergeordnetem Maße anfallen.

Die erfindungsgemäß als Komponente 2) einzusetzenden Polydiorganosiloxan-Polycarbonat-Blockcokondensate sind, wie bereits erwähnt, als solche bekannt (siehe beispielsweise DE-OS 33 47 071 (Le A 22 802)).

Die Blockcokondensate können sowohl linear als auch verzweigt sein.

Die Verzweigung kann durch den Einbau geringer Mengen, vorzugsweise zwischen 0,05 und 2,0 Mol.-%, bezogen auf eingesetzte Diphenole, an drei- oder mehr als dreifunktionellen Verbindungen, z.B. solchen mit drei oder mehr als drei phenolischen Hydroxygruppen in bekannter Weise erfolgen.

Einige der verwendbaren Verbindungen mit drei oder mehr als drei phenolischen Hydroxygruppen sind beisielsweise Phloroglucin, 4,6-Dimethyl-2,4,6-tri-(4-hydroxyphenyl)-heptan, 1,3,5-Tri-(4-hydroxyphenyl)-benzol, 1,1,1-Tri- (4-hydroxyphenyl)-ethan, 2,6-Bis-(2′-hydroxy-5′-methylbenzyl)-4-methylphenol, 2-(4-hydroxyphenyl)-2-(2,4-dihydroxyphenyl)-propan und 1,4-Bis-(4,4′-dihydroxytriphenyl-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl )-2-oxo-2,3-dihydroindol.

Die erfindungsgemäß einzusetzenden Polydiorganosiloxan-Polycarbonat-Blockcokondensate können als Komponente 2) allein oder im Gemisch von zwei oder mehr als zwei verschiedenen Polydiorganosiloxan-Polycarbonat-Blockcokondensaten eingesetzt werden.

Die Komponente 2) kann auch eine Mischung aus üblichen polysiloxanfreien, aromatischen, thermoplastischen Polycarbonaten mit einer relativen Viskosität von 1,15 bis 1,38 und Polydiorganosiloxan-Polycarbonat-Blockcokondensaten mit einer relativen Viskosität zwischen 1,15 und 2,5 sein, die so zusammengesetzt ist, daß der Gesamtgehalt an Polydiorganosiloxan-Einheiten im Gemisch wiederum der Komponente 2) entspricht.

In den Fällen, in denen die Komponente 2) eine Mischung aus siloxanhaltigen Polycarbonaten und siloxanfreien Polycarbonaten ist, können die siloxanhaltigen Polycarbonate auch einen Gehalt an einkondensierten Polydiorganosiloxandiphenolen (IIc) von mehr als 20 Gew.-% enthalten, sofern durch Abmischung mit den siloxanfreien Polycarbonaten der Gehalt in der Polycarbonatmischung wiederum zwischen 2 und 20 Gew.-% liegt.

Die erfindungsgemäßen Mischungen können für Vinylcopolymerisate und thermoplastische Polycarbonate übliche Verarbeitungsmittel, wie z.B. Fließ- und Entformungsmittel, Füllstoffe und Verstärkungsmittel, wie z.B. Talk, Kreide oder Glasfasern, Pigmente, wie z.B. Titandioxid oder Ruß und/oder außerdem Flammschutzmittel, wie z.B. Halogenverbindungen, Antimonoxid, Sulfonate u.a. enthalten.

Gegenstand der vorliegenden Erfindung sind somit auch Mischungen, bestehend aus den Komponenten 1) und 2) und mindestens einem Zusatz ausgewählt aus Verarbeitungshilfsmitteln, Füllstoffen, Verstärkungsmitteln, Pigmenten und Flammschutzmitteln.

Die Herstellung der erfindungsgemäßen Mischungen aus den Komponenten geschieht vorzugsweise in Extrudern. Es sind jedoch auch Kneter, Walzen oder Rührgefäße zur Herstellung geeignet.

Gegenstand der vorliegenden Erfindung ist somit auch ein Verfahren zur Herstellung der erfindungsgemäßen Mischungen bestehend aus den gepfropften Vinylcopolymerisaten gemäß Komponente 1) und den thermoplastischen, aromatischen Polydiorganosiloxan-Polycarbonat-Blockcokondensaten gemäß Komponente 2) und gegebenenfalls mindestens einem Zusatz ausgewählt aus Verarbeitungshilfsmitteln, Füllstoffen, Verstärkungsmitteln, Pigmenten und Flammschutzmitteln, das dadurch gekennzeichnet ist, daß man die Komponenten 1) und 2) in der Schmelze, vorzugsweise bei Temperaturen von 280° C bis 320° C, in üblichen Mischaggregaten, vorzugsweise in Extrudern, vermischt, und gegebenenfalls entweder vor oder während oder nach dem Vermischen mindestens einen Zusatz ausgewählt aus Verarbeitungshilfsmitteln, Füllstoffen, Verstärkungsmitteln, Pigmenten und/oder Flammschutzmitteln in den jeweils erforderlichen Mengen zusetzt und einarbeitet.

Zur Herstellung der erfindungsgemäßen Mischungen kann es angezeigt sein, zunächst ein Konzentrat aus den Komponenten 1) und 2) herzustellen, und dieses mit einer größeren Menge 2) auf den gewünschten Gehalt an 1) zu verdünnen. Die Herstellung der Konzentrate kann in den vorgenannten Mischaggregaten bei Temperaturen zwischen 50° C und 320° C, vorzugsweise 150° C und 320° C, erfolgen.

Darüber hinaus ist die Herstellung der erfindungsgemäßen Mischungen aus den Komponenten 1) und 2) und gegebenenfalls den erwähnten Zusätzen auch aus einem Gemisch der jeweiligen Lösungen der Komponentgen 1) und 2) in aliphatischen und/oder aromatischen Halogenkohlenwasserstoffen, wie beispielsweise $CH_2Cl_2$ oder Monochlorbenzol, durch Ausdampfextrusion über geeignete Extruder mit einer Vorrichtung zur Voreindampfung möglich, wobei gegebenenfalls die erwähnten Zusätze entweder dem Gemisch der jeweiligen Lösungen vor der Ausdampfextrusion oder der nach der Ausdampfextrusion erhaltenen Schmelze der Komponenten 1) und 2) zugesetzt werden können.

Gegenstand der vorliegenden Erfindung ist somit auch ein Verfahren zur Herstellung der erfindungsgemäßen Mischungen bestehend aus den gepfropften Vinylcopolymerisaten gemäß Komponente 1) und den thermoplastischen, aromati schen Polydiorganosiloxan-Polycarbonat-Blockcokondensaten gemäß Komponente 2) und gegebenenfalls mindestens einem Zusatz ausgewählt aus Verarbeitungshilfsmitteln, Füllstoffen, Verstärkungsmitteln, Pigmenten und/oder Flammschutzmitteln, das dadurch gekennzeichnet ist, daß

man Gemische der jeweiligen Lösungen der Komponenten 1) und 2) in aliphatischen und/oder aromatischen Halogenkohlenwasserstoffen der Ausdampfextrusion über geeignete Extruder mit einer Vorrichtung zur Voreindampfung unterwirft, wobei gegebenenfalls mindestens ein Zusatz ausgewählt aus Verarbeitungshilfsmitteln, Füllstoffen, Verstärkungsmitteln Pigmenten und/oder Flammschutzmitteln entweder dem Gemisch der jeweiligen Lösungen der Komponenten 1) + 2) vor der Ausdampfextrusion oder der nach der Ausdampfextrusion erhaltenen Schmelze der Komponenten 1) + 2) zugesetzt werden.

Die Formmassen der vorliegenden Erfindung können zur Herstellung von Formkörpern jeder Art nach bekannten Verfahren verwendet werden. Insbesondere können Formkörper durch Extrusion oder Spritzguß auf den hierfür üblichen Aggregaten hergestellt werden.

Beispiele für herstellbare Formkörper sind Karosserieteile und Gehäuseteile, z.B. für elektrische Geräte und Apparaturen wie Haushaltsgeräte und Platten für den Bausektor oder Folien.

## Beispiele

### 1. Herstellung eines Pfropfpolymeren

#### 1.a Herstellung der Pfropfgrundlage

Die Pfropfgrundlage wird erhalten durch Copolymerisation von 1.950 g Styrol und 50.0 g (1,29 Mol.%) 4-Trimethylsiloxy-α-methylstyrol in Masse in Gegenwart von 2 g α,α-Azodiisobutyronitril unter Stickstoff bei 80° C innerhalb von 29 Stunden.

Das mittlere Molekulargewicht, ermittelt durch Gelpermeationschromatographie, wurde zu Mn = 68377 g/mol bestimmt.

#### 1.b Pfropfungsreaktion

Innerhalb von einer Stunde werden bei 20 - 25° C unter Rühren 1,5 kg (15 mol) Phosgen in ein Gemisch aus 2,018 kg (8,85 mol) 2,2-Bis(4-hydroxyphenyl)-propan (BPA); 374,4 eines Polydimethylsiloxanblocks (Mn = 7000 g/mol) mit zwei Bisphenol-A-Endgruppen 45 g (= 3 Mol% bezogen auf BPA) p-tert.-Butylphenol; 4 kg Natronlauge (w = 45 %); 40 l Wasser, 12 kg Chlorbenzol und 2.000 g der unter a) beschriebenen Pfropfgrundlage (w = 100 %) gelöst in 37,2 kg Methylenchlorid eingeleitet. Anschließend werden 14 ml (= 1 mol% bezogen auf BPA) N-Ethylpiperidin zugesetzt und 1 Stunde lang nachgerührt. Die organische Phase wird abgetrennt, elektrolytfrei gewaschen und nach dem Abdestillieren des Methylen chlorids bei 280° C extrudiert. Es wurden 4,2 kg Produkt erhalten, mit einer relativen Lösungsviskosität $\eta_{rel}$ = 1,345. Das berechnete Molekulargewicht der Polycarbonatseitenäste/Pfropfstelle beträgt Mn = 15.382 g/mol, was einem Polykondensationsgrad p von 60 entspricht.

2. Polydiorganosiloxan-Polycarbonat-Blockcokondensat aus 2,2-Bis-(4-hydroxyphenyl)-propan und

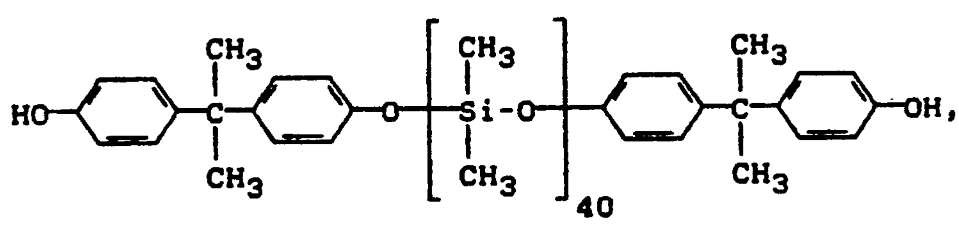

hergestellt unter Verwendung von Phenol als Kettenabbrecher gemäß DE-OS 3 347 071 (Le A 22 802), das eine relative Viskosität (gemessen in $CH_2Cl_2$ bei 25° C und 0,5 g pro 100 ml) von 1,29 und einen Gehalt an Dimethylsiloxan-Einheiten von 5 Gew.-% hat.

### 3. Herstellung der erfindungsgemäßen Mischungen und Ermittlung einiger Eigenschaften

Zur Herstellung der Mischungen wurden zunächst über eine Lösung der Komponenten Konzentrate der

Pfropf polymerisate im betreffenden Polycarbonat gefertigt. Die gewünschten Einstellungen wurden durch Compoundierung der Konzentrate mit dem jeweiligen Polycarbonat auf einem Doppelwellenextruder homogenisiert.

Die Herstellung der Prüfkörper erfolgte bei 310° C Massetemperatur auf einem Spritzgießaggregat.

Zur Beurteilung des Verarbeitungsverhaltens wurden auf einem sogenannten Streifenwerkzeug mit zentralem Stangenanguß Streifen (Maße: 435 mm x 50 mm x 2 mm) hergestellt, deren Oberfläche insbesondere in Angußnähe ohne optische Hilfsmittel auf das Auftreten von Delaminiserungen und Oberflächenstörungen (z.B. matte Flecken) untersucht wurde.

Zur Bestimmung der Benzinbeständigkeit wurden Prüfkörper mit den Maßen 80 mm x 10 mm x 4 mm hergestellt, die auf Biegeschablonen verschiedener Krümmungsradien so eingespannt wurden, daß Randfaserdehnungen $\epsilon_R$ von 0,4 % bzw. 1,0 % resultierten. Die Schablonen wurden mit aufgebrachter Probe 15 Minuten bei 70° C in einem Wärmeschrank (mit Luftdurchwirbelung nach DIN 50 011, 2, 3) gelagert.

Die Schablonen mit den Proben wurden aus dem Schrank entnommen und unmittelbar danach ein Prüfkraftstoff-getränkter Wattebausch aufgelegt. Als Prüfkraftstoff wurde ein Testbenzin nach DIN 51 604 verwendet, das sich aus 50 Vol.-% Toluol, 30 Vol.-%. Isooctan, 15 Vol.-% Diisobutylen und 5 Vol.-%. Ethanol zusammensetzt. Nach 15 Minuten Einwirkungsdauer wurde dar Wattebausch entfernt und weitere 15 Minuten abgewartet, um die Probe ablüften zu lassen.

Anschließend wurden die Prüfkörper mit dem unbewaffneten Auge wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch |

Die Ergebnisse sind in folgender Tabelle zusammengefaßt:

| Beispiel | 1 | 2* | 3* | 4* | 5* |
|---|---|---|---|---|---|
| Komponenten: | - Gew.-% - | | | | |
| 2 | 100 | 98,5 | 97,5 | 95 | 90 |
| 1 | - | 1,5 | 2,5 | 5 | 10 |
| Delaminierung: | - | nein | nein | nein | nein |
| Oberfläche: | gut | gut | gut | gut | gut |
| $T_k$/° C: | <-60 | <-60 | <-60 | <-60 | <-60 |
| Benzinbeständigkeit: | | | | | |
| $\epsilon_R$ 0,4 % | 3 | 2 | 2 | 2 | 2 |
| $\epsilon_R$ 1,0 % | 4 | 4 | 2 | 2 | 2 |

* = erfindungsgemäße Beispiele

## Ansprüche

1. Mischungen bestehend aus

1) 0,1 Gew.-% bis 30 Gew.-% an gepfropften Vinylcopolymerisaten enthaltend Struktureinheiten der Formel (IIIa)

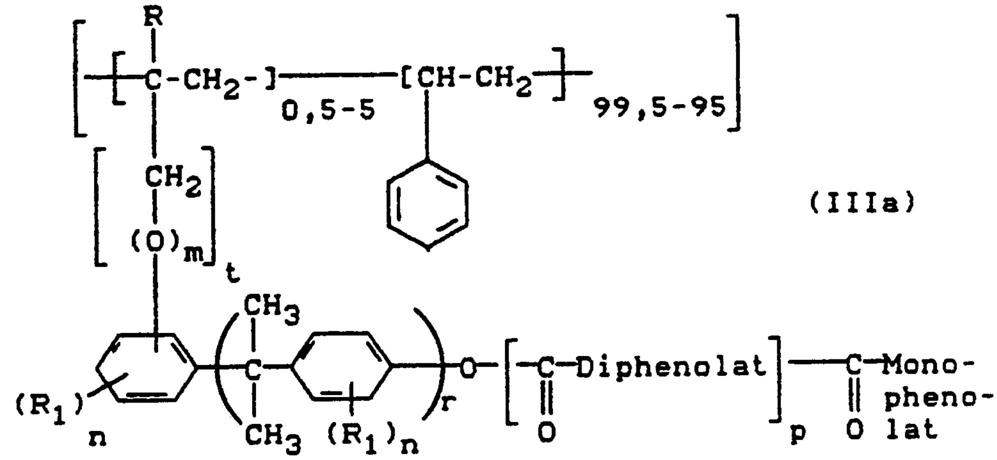

(IIIa)

worin
R = H oder $C_1$-$C_4$-Alkyl,
$R_1$ = Cl, Br, $C_1$-$C_4$-Alkyl, Cyclohexyl oder $C_1$-$C_4$-Alkoxy,
m = 0 oder 1,
n = 0, 1 oder 2,
r = 0 oder 1,
t = 0 oder 1,
p = eine ganze Zahl zwischen 35 und 70 ist,
und Diphenolat und Monophenolat Reste sind, die durch Abzug der phenolischen H-Atome aus Diphenolen bzw. Monophenolen resultieren, wobei die Pfropfgrundlage von (IIIa) ein $\overline{M}n$ (Zahlenmittelmolekulargewicht, ermittelt durch Gelpermeationschromatographie) von 45 000 bis 95 000 hat, wobei der Gehalt an Pfropfgrundlage in (IIIa) zwischen 35 Gew.-% und 55 Gew.-%, bezogen auf Gesamtgewicht an gepfropftem Vinylcopolymerisat inclusive aufgepfropften Polycarbonatketten beträgt, wobei somit der Gehalt an Polycarbonatseitenketten in (IIIa) zwischen 65 Gew.-% und 45 Gew.-%, bezogen auf Gesamtgewicht an gepfropftem Vinylcopolymerisat inclusive aufgepfropften Polycarbonatketten beträgt, und wobei die Diphenolat-Reste in (IIIa) bis zu 20 Gew.-%, bezogen auf das Gesamtgewicht der Polycarbonatseitenketten, Reste der Formel (IIa.1)

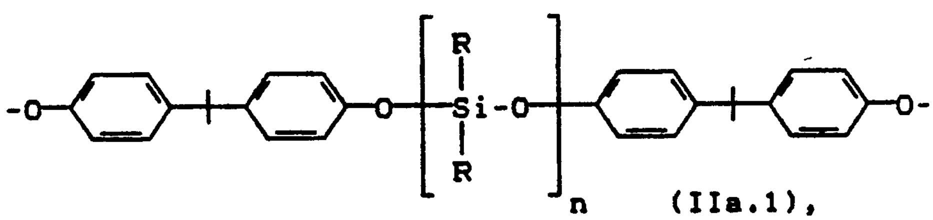

(IIa.1),

sind,
worin R $C_1$-$C_6$-Alkyl und n 20 bis 200 sind,
und

2) 99,9 Gew.-% bis 70 Gew.-% an thermoplastischen, aromatischen Polydiorganosiloxan-Polycarbonat-Blockcokondensaten auf Basis der Diphenole dar Formeln (IIc) und (IV)

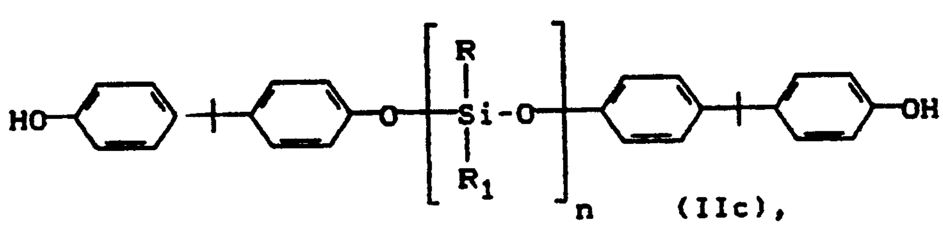

(IIc),

HO-D-OH (IV),

worin

R und $R_1$ unabhängig voneinander $C_1$-$C_{20}$-alkyl und $C_6$-$C_{14}$-Aryl bedeuten, welche durch Fluor, Chlor und/oder Brom substituiert sein können, worin "n" eine ganze Zahl von 5 bis 100, vorzugsweise von 20 bis 80 ist und worin -D- ein zweibindiger $C_6$-$C_{30}$-Rest eines Si-freien Diphenols ist, wobei von 2 Gew.-% bis 20 Gew.-% Diphenole der Formel (IIc) und von 98 Gew.-% bis 80 Gew.-% Diphenole der Formel (IV), bezogen jeweils auf die Molsumme der im Blockcokondensat der Komponente 2) einkondensierten Diphenole (IIc) + (IV), enthalten sind, mit einem $\overline{M}w$ (Gewichtsmittelmolekulargewicht, ermittelt in bekannter weise über die relative Lösungsviskosität) zwischen 15.000 und 38.000, mit einer relativen Viskosität (gemessen an einer Lösung von 0,5 g Blockkondensat in 1 dl $CH_2Cl_2$ bei 25° C) von 1,15 bis 1,38.

2. Mischungen gemäß Anspruch 1, dadurch gekennzeichnet, daß sie zusätzlich aus mindestens einem Zusatz, ausgewählt aus Verarbeitungshilfsmitteln, Füllstoffen, Verstärkungsmitteln, Pigmenten und/oder Flammschutzmitteln bestehen.

3. Verfahren zur Herstellung der Mischungen des Anspruchs 1, dadurch gekennzeichnet, daß man die Komponenten 1) und 2) in der Schmelze in üblichen Mischaggregaten vermischt.

4. Verfahren zur Herstellung der Mischungen des Anspruchs 1, dadurch gekennzeichnet, daß man Gemische der jeweiligen Lösungen der Komponenten 1) und 2) in aliphatischen und/oder aromatischen Halogenkohlenwasserstoffen der Ausdampfextrusion über geeignete Extruder unterwirft.

5. Verfahren zur Herstellung der Mischungen des Anspruchs 2, dadurch gekennzeichnet, daß man die Komponenten 1) und 2) in der Schmelze in üblichen Mischaggregaten vermischt und entweder vor oder während oder nach dem Vermischen mindestens einen Zusatz ausgewählt aus Verarbeitungshilfsmitteln, Füllstoffen, Verstärkungsmitteln, Pigmenten und/oder Flammschutzmitteln in den jeweils erforderlichen Mengen zusetzt und einarbeitet.

6. Verfahren zur Herstellung der Mischungen des Anspruchs 2, dadurch gekennzeichnet, daß man Gemische der jeweiligen Lösungen der Komponenten 1) und 2) in aliphatischen und/oder aromatischen Halogenkohlenwasserstoffen der Ausdampfextrusion über geeignete Extruder unterwirft, wobei mindestens ein Zusatz ausgewählt aus Verarbeitungshilfsmitteln, Füllstoffen, Verstärkungsmitteln, Pigmenten und/oder Flammschutzmitteln entweder dem Gemisch der jeweiligen Lösungen der Komponenten 1) + 2) vor der Ausdampfextrusion oder der nach der Ausdampfextrusion erhaltenen Schmelze der Komponenten 1) + 2) zugesetzt werden.